# EUROPÄISCHE PATENTSCHRIFT

(11) **EP 1 058 593 B1**
(45) Veröffentlichungstag und Bekanntmachung des Hinweises auf die Patenterteilung: **10.04.2002**
(21) Anmeldenummer: 98964438.0
(22) Anmeldetag: 25.11.1998
(51) Int. Cl.: B23Q 1/54

(54) **HEXAPOD-BEARBEITUNGSZENTRUM**
HEXAPOD MACHINING CENTRE
INSTALLATION D'USINAGE HEXAPODE

(30) Priorität: 27.02.1998 DE 29803454
(43) Veröffentlichungstag der Anmeldung: 13.12.2000
(73) Patentinhaber: Fraunhofer-Gesellschaft zur Förderung der angewandten Forschung e.V., 80636 München (DE)
(72) Erfinder: WIELAND, Frank, D-09113 Chemnitz (DE)
(74) Vertreter: Grünecker, Kinkeldey, Stockmair & Schwanhäusser Anwaltssozietät
(86) Internationale Anmeldenummer: EP9807593
(87) Internationale Veröffentlichungsnummer: WO9943463

(56) Entgegenhaltungen:
- DE-A- 19 636 099
- DE-A- 19 640 769
- US-A- 5 354 158
- US-A- 5 401 128

## Beschreibung

Die vorliegende Erfindung betrifft ein Hexapod-Bearbeitungszentrum mit einem feststehenden Gestell und mit einem Träger, die über sechs in ihrer Länge verstellbare Streben miteinander verbunden sind gemäß dem Oberbegriff des Patentanspruchs 1 und wie aus z.B. DE-A-19 640 769 bekannt.

Derartige Hexapod-Bearbeitungszentren werden als Werkzeugmaschinen eingesetzt. Sie eignen sich insbesondere für Maschinen zur spanenden Bearbeitung, wie z.B. zum Fräsen, Bohren, Drehen oder Schleifen oder zur Laserbearbeitung.

Hexapod-Bearbeitungszentren bestehen prinzipiell aus einem bisweilen auch als Arbeitsplattform bezeichneten Träger und einem feststehenden Gestell, die miteinander durch sechs in ihrer Länge verstellbare Streben verbunden sind. Dies ermöglicht eine Bewegung der Arbeitsplattform in allen sechs Raumfreiheitsgraden, d.h. drei translatorischen Freiheitsgraden und drei rotatorischen Freiheitsgraden.

Ein erstes Hexapod-Bearbeitungszentrum ist aus der US-A-5,401,128 bekannt. Diese bekannte Werkzeugmaschinenstruktur besteht aus einem Maschinenrahmen in Oktaederform, der zwölf starre Verstrebungen aufweist. Im Zentrum des Maschinenrahmens ist eine Bearbeitungseinheit mit einer Spindel angeordnet. Weiterhin ist im unteren Teil des oktaederförmigen Maschinenrahmens eine feststehende Werkstückaufnahmevorrichtung angeordnet. Oberhalb der Werkstückaufnahmevorrichtung ist das Hexapod, d.h. ein Träger- bzw. eine Arbeitsplattform für die Bearbeitungseinheit, z.B. eine Bohr- oder Frässpindel vorgesehen. Jeweils zwei in ihrer Länge verstellbare Streben des Hexapods sind mit einem Ende an einer Ecke eines dreieckförmigen oberen Rahmenteils des Maschinenrahmens gelenkig angebracht, wobei die Anlenkpunkte der beiden Streben am Maschinenrahmen in ihrer Höhe nur geringfügig voneinander beabstandet sind. Die Anlenkpunkte der sechs Streben an der Arbeitsplattform liegen alle in einer gemeinsamen Ebene. Diese Anordnung bedingt eine Einschränkung der rotatorischen Bewegungen. Zudem ist die Aufnahme der Kräfte in den Streben nicht optimal, da diese nicht in den Hauptbelastungsrichtungen verlaufen.

Ein weiteres Hexapod-Bearbeitungszentrum ist aus der US-A-5,354,158 bekannt. Bei dem dort gezeigten Hexapod sind jeweils zwei benachbarte Streben an einer Ecke eines gedachten Dreieckes an der Arbeitsplattform und jeweils zwei andere benachbarte Streben an der Ecke eines weiteren gedachten Dreiecks an dem Gestell angelenkt, wobei die beiden parallel zueinander angeordneten Dreiecke gegeneinander verdreht sind. Die Anlenkpunkte der Streben an der Arbeitsplattform sowie an dem Gestell sind jeweils in einer gemeinsamen Ebene angeordnet. Zudem ist aus der US-A-5.354,158 bekannt, die Anlenkpunkte an dem Gestell in zwei voneinander beabstandeten Ebenen anzuordnen. Diese Anordnung weist hinsichtlich der Beweglichkeit der Arbeitsplattform und der Kraftaufnahme ähnliche Nachteile auf wie die Anordnung gemäß US-A-5,401,128.

Der vorliegenden Erfindung liegt daher die Aufgabe zugrunde, bei einem Hexapod-Bearbeitungszentrum der eingangs genannten Art die Beweglichkeit des Trägers in allen sechs Freiheitsgraden, insbesondere in den drei rotatorischen Freiheitsgraden, zu verbessern und die Kraftaufnahme zu optimieren.

Diese Aufgabe wird gelöst durch ein Hexapod-Bearbeitungszentrum mit einem feststehenden Gestell und einem Träger, die über sechs in ihrer Länge verstellbare Streben miteinander verbunden sind, wobei die Anlenkpunkte von drei Streben an dem Träger eine erste Angriffsebene bilden und die Anlenkpunkte der drei weiteren Streben an dem Träger eine zweite, von der ersten Träger-Angriffsebene beabstandete Angriffsebene bilden, wobei die Anlenkpunkte von drei Streben an dem Gestell eine erste Angriffsebene bilden und die Anlenkpunkte der drei weiteren Streben an dem Gestell eine zweite, von der ersten Gestell-Angriffsebene beabstandete Angriffsebene bilden und wobei die Anlenkpunkte der beiden Träger-Angriffsebenen derart übereinander angeordnet sind, daß die Verbindungslinien der übereinanderliegenden Anlenkpunktpaare parallel zueinander verlaufen.

Hierdurch wird eine hohe Bewegungsfreiheit des Trägers bzw. der Arbeitsplattform erzielt, da die Gelenke der Streben an den Anlenkpunkten an dem Träger einander nicht stören. Insbesondere wird hierdurch eine höhere Bewegungsfreiheit in den Drehfreiheitsgraden erzielt. Das Hexapod-Bearbeitungszentrum kann daher auch für kompaktere Träger bzw. kleinere Maschinen eingesetzt werden.

Das Übereinanderliegen der Anlenkpunkte an dem Träger führt zudem zu einer Verbesserung der Steifigkeit der Abstützung des Trägers und ermöglicht daher eine größere Fertigungsgenauigkeit.

An dem Träger kann eine Bearbeitungseinheit und/oder Sensorik zur Positionserfassung angebracht werden. Die Bearbeitungseinheit kann eine Spindel tragen, wobei eine gewünschte Raumlage der Spindel je nach Bedarf, z.B. horizontal oder vertikal, vorgesehen wird. Der Aufbau des Gestells wird hierzu entsprechend angepaßt.

Die Aufhängung der Streben im Gestell erfolgt so, daß die Anlenkpunkte von jeweils drei Streben an dem Gestell insgesamt zwei separate Angriffsebenen bilden. Diese Anordnung der Streben trägt zu einer höheren Beweglichkeit, insbesondere in den rotatorischen Freiheitsgraden sowie zu einer Vergleichmäßigung der Kraftaufnahme bei. Außerdem wird hierdurch eine besonders bauraumökonomische Anordnung ermöglicht, da durch die Verteilung der Anlenkpunkte an dem Träger wie an dem Gestell für die Gestaltung der jeweiligen Gelenke in den Anlenkpunkten mehr Raum zur Verfügung steht. Insgesamt wird der konstruktive Gestaltungsfreiraum erhöht, bzw. eine kompaktere Bauweise ermöglicht, so daß das Verhältnis des zur Bearbeitung zur Verfügung stehenden Raumes zu dem Raumbedarf des Bearbeitungszentrum erhöht wird.

Weitere vorteilhafte Ausführungen der Erfindung sind den nachgeordneten Schutzansprüchen zu entnehmen.

Im folgenden wird nun die Erfindung anhand eines Ausführungsbeispieles unter Bezug auf die Zeichnung beschrieben. Es zeigt:

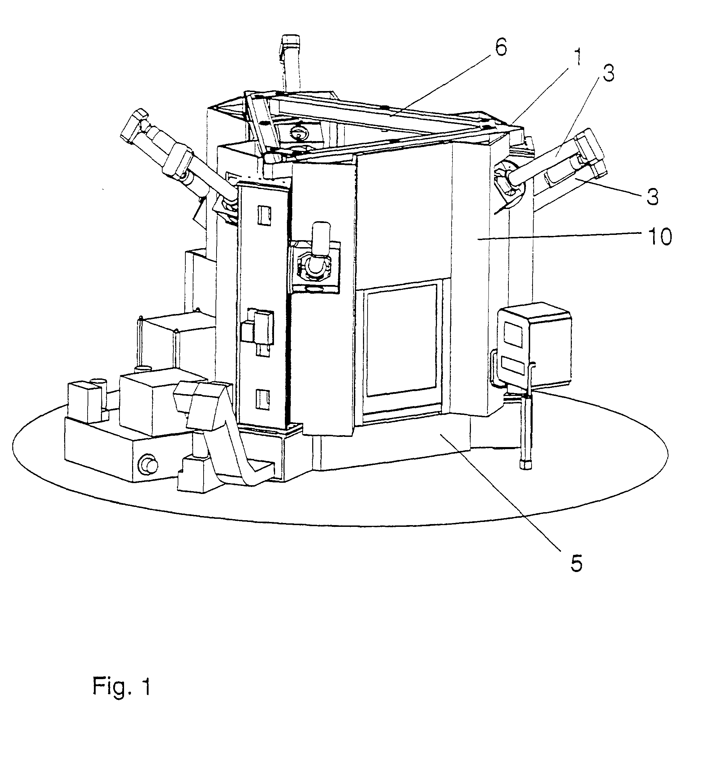

- Fig. 1: eine räumliche Gesamtansicht des Ausführungsbeispieles eines Hexapod-Bearbeitungszentrums,
- Fig. 2: eine räumliche Darstellung des Hexapod-Bearbeitungszentrums nach Fig. 1 ohne Verblendung,
- Fig. 3: eine weitere räumliche Darstellung des Hexapod-Bearbeitungszentrums nach Fig. 1 ohne Verblendung, und
- Fig. 4: eine schematische Draufsicht auf das Hexapod-Bearbeitungszentrum nach Fig. 1 zur Darstellung der Strebengeometrie.

Das in den Figuren des Ausführungsbeispiels dargestellte Hexapod-Bearbeitungszentrum ist als Werkzeugmaschine zur spanenden Bearbeitung ausgebildet. Diese Werkzeugmaschine weist ein Gestell 1 auf, das eine im wesentlichen dreieckige Grundfläche beansprucht. Von einem bodenseitigen Gestellbett 5 erstrecken sich an den Eckpunkten der dreieckigen Grundfläche drei Säulen 4 nach oben. Diese Säulen 4 sind an ihrem oberen Ende über ein gemeinsames Gestelljoch 6 miteinander verbunden und bilden zusammen mit dem Gestellbett 5 einen Maschinenrahmen bzw. das Gestell 1.

An diesem Gestell 1 ist ein Träger bzw. eine Arbeitsplattform 2 über sechs in ihrer Länge verstellbare Streben 3 aufgehängt. Der Träger 2 nimmt das eigentliche Werkzeug, zum Beispiel ein Bohr- oder Fräswerkzeug auf, um damit ein Werkstück in einem Bearbeitungsraum innerhalb des Gestells 1, d.h. zwischen dem Gestellbett 5 und dem Träger 2, zu bearbeiten.

Zur Sicherung des Bedienpersonals sind die zwischen den Säulen 4 verbleibenden Gestellöffnungen durch Verblendungen 10 verschlossen, in denen zur Kontrolle eines Fertigungsprozesses Durchblicköffnungen vorgesehen sind. Weitherhin sind zur Ermöglichung des Zugangs zu dem Arbeitsraum, insbesondere zu einem an dem Gestellbett 5 vorgesehenen Werkstücktisch 8 verschließbare Zugangsöffnungen vorgesehen. Ein möglichst großer Bearbeitungsbereich wird dadurch realisiert, daß der Werkstücktisch 8 in zwei Richtungen in der Ebene des Gestellbettes 5 bewegbar ist, so daß sich insgesamt auch Werkstücke bearbeiten lassen, deren Bearbeitungsmaße den maximalen Bewegungsbereich des Trägers 2 überschreiten.

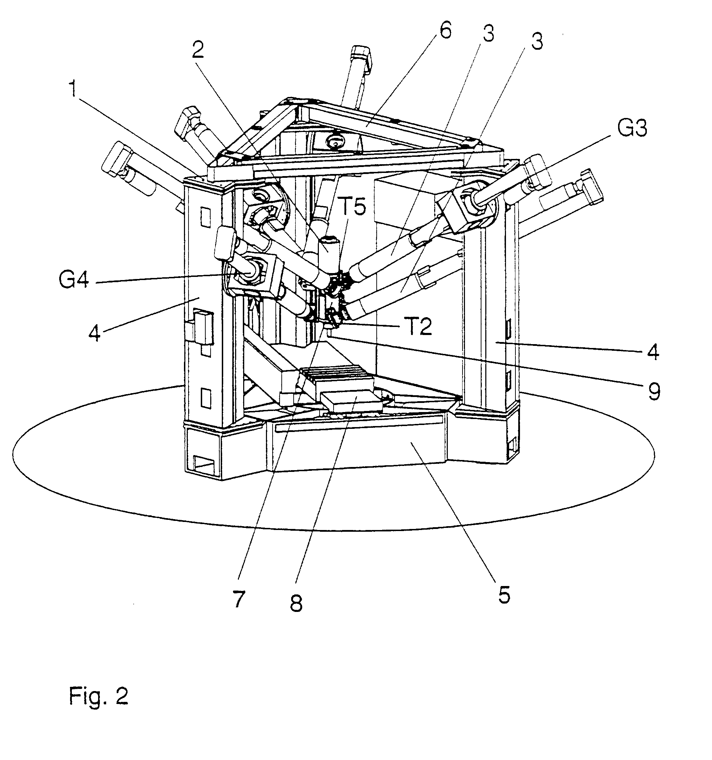

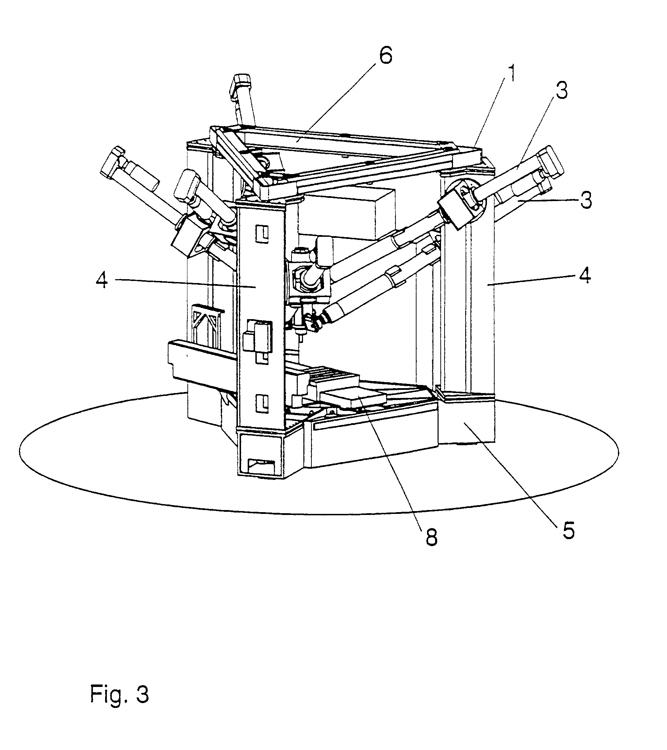

Wie insbesondere aus den Figuren 2 und 3 ersichtlich ist, weist der Träger 2 eine zu seiner Längsachse A im wesentlichen zylindrische Grundform auf, wobei die Längsachse A in Ruhe bzw. Normalstellung des Trägers 2 senkrecht zu der Gestellbettebene verläuft. Bei der gezeigten Ausführungsform als spanende Werkzeugmaschine ist an dem Träger 2 eine zu dessen Längsachse A koaxiale Hauptspindel 9 vorgesehen, die durch eine ebenfalls an dem Träger 2 angeordnete Antriebsvorrichtung, beispielsweise einen elektrischen Motor angetrieben wird.

Der zylindrische Träger 2 weist an seinem Außenmantel weiterhin drei sich in Richtung der Längsachse A erstreckende Anlenkbereiche 7 auf, die jeweils abgeflacht sind. An jedem dieser Anlenkbereiche sind jeweils zwei in Richtung der Längsachse A voneinander beabstandete Gelenkansätze vorgesehen, über die die Streben 3 an den Träger 2 angekoppelt sind. Die drei Anlenkbereiche 7 sind dabei gleichmäßig am Umfang des zylindrischen Trägers 2 verteilt. Die Gelenkansätze an den einzelnen Anlenkbereichen befinden sich stets auf gleicher Höhe. Insgesamt ergeben sich hierdurch zwei Gruppen von Anlenkpunkten für die Streben 3, wobei die Anlenkpunkte jeweils ein gleichseitiges Dreieck bilden. Dabei definieren die in Fig. 2 und 3 obenliegenden Anlenkpunkte T₁,T₂,T₃ eine erste Angriffsebene der Streben 3 an dem Träger 2 und die in diesen Figuren unten liegenden Anlenkpunkte T₄, T₅, T₆ eine zweite, von der ersten Angriffsebene beabstandete, parallele Angriffsebene. Diese Angriffsebenen verlaufen senkrecht zu der Längsachse A des Trägers 2 und damit auch der Drehachse der Hauptspindel 9.

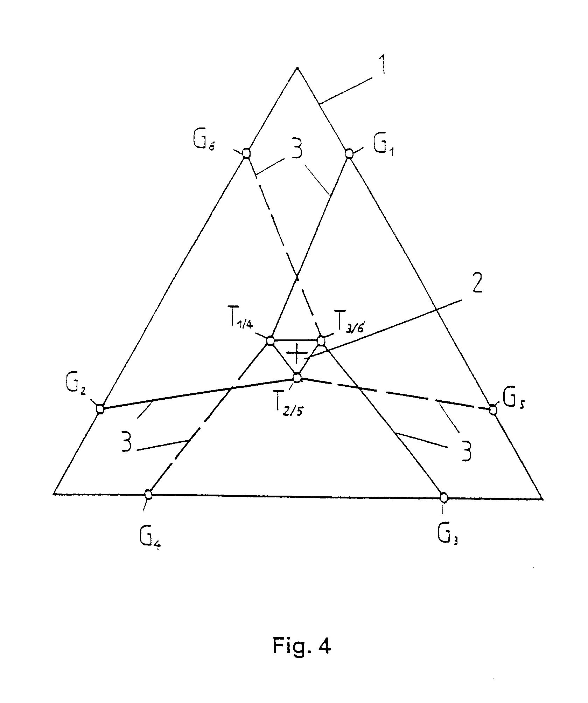

Die Kongruenz, d.h. das Übereinanderliegen der Trägerangriffspunkte T₁ bis T₆, ist insbesondere aus der Fig. 4 erkennbar. So liegt beispielsweise der "obere" Trägerangriffspunkt T₁ über dem "unteren" Trägerangriffspunkt T₄. Aus Fig. 4 ist weiterhin ersichtlich, daß sich die Verbindungslinien solcher übereinanderliegender Trägerangriffspunktpaare allesamt parallel zueinander erstrecken. Dies ist auch dann der Fall, wenn die Trägerangriffspunkte an den jeweiligen Anlenkbereichen zwar übereinander, jedoch mit unterschiedlichem Abstand voneinander vorgesehen werden, so daß dann die erste und zweite Trägerangriffsebene auch gegeneinander angewinkelt sein können.

Die jeweils oben liegenden Streben 3, d.h. diejenigen, die an den Trägeranlenkpunkten T₁,T₂,T₃ der ersten Angriffsebene an dem Träger 2 angekoppelt sind, erstrecken sich jeweils zu einer Säule 4 des Gestells. Die Anlenkpunkte G₁,G₂,G₃ an dem Gestell 1 definieren eine erste Gestellanlenkebene am jochseitigen Ende der Säulen 4. Die verbleibenden 3 Streben sind in einer zweiten Gestellangriffsebene in den Figuren 2 und 3 unterhalb der ersten Angriffsebene an den Säulen 4 angekoppelt.

Die Anordnung der Streben 3 erfolgt dabei derart, daß jeweils zwei sich von einem Anlenkbereich 7 des Trägers 2 weg erstreckende Streben zu unterschiedlichen Säulen 4 laufen. Wie Fig. 4 zu entnehmen ist erfolgt die Anordnung weiterhin so, daß die an den Anlenkpunkten T₁,T₂,T₃ der ersten Trägerangriffsebene angekoppelten Streben in einer Drehrichtung bezogen auf die Längsachse A des Trägers 2 angreifen, d.h. in Fig. 4 im Gegenuhrzeigersinn, während die verbleibenden Streben an der zweiten Trägerangriffsebene in entgegengesetzter Drehrichtung, d.h. in Fig. 4 im Uhrzeigersinn, angreifen.

Die Trägeranlenkpunkte T₁,T₂,T₃ der ersten Trägerangriffsebene sind mit den Anlenkpunkten G₁,G₂,G₃ der ersten Gestellangriffsebene verbunden. In gleicher Weise sind die Anlenkpunkte der beiden zweiten Angriffsebenen miteinander gekoppelt.

Wie Fig. 4 weiterhin zu entnehmen ist, sind an einer Säule 4 jeweils eine Strebe 3, die Anlenkpunkte der ersten Angriffsebene, z.B. T₁ und G₁, verbindet, sowie einer Strebe 3, die Anlenkpunkte, z.B. T₆ und G₆, der zweiten Angriffsebene verbindet, vorgesehen. Die Ankopplung erfolgt dabei auf gegenüberliegenden Seiten der jeweiligen Säule, wobei die Anordnungsweise für jede der drei Säulen 4 identisch ist. Die von einer Säule 4 sich zu dem Träger 2 hin erstreckenden Streben 3 greifen an diesem tangential an benachbarten Angriffsbereichen 7 an, so daß sich diese Streben in einer Draufsicht, wie in Fig. 4 dargestellt, im Raum kreuzen. Diese Kreuzung beeinträchtigt jedoch nicht den Bewegungsspielraum des Trägers 2, da die Anlenkung dieser beiden Streben in zwei unterschiedlichen Angriffsebenen an dem Träger erfolgt. Die Beabstandung der Angriffsebenen an dem Träger ist dabei größer gewählt als der Durchmesser der einzelnen Streben 3.

Letztere können als Hydraulik- oder Pneumatikzylinder oder auch, wie in dem Ausführungsbeispiel gezeigt, als motorisch angetriebene Wälzschraubtrieb ausgebildet werden. Die Ankopplung der Streben an dem Träger 2 wie auch an dem Gestell 3 erfolgt über Universalgelenke, wie z.B. Kugel- oder Kardangelenke, die eine Drehbwegung um alle drei Raumachsen auch gleichzeitig zuläßt.

## Patentansprüche

1. Hexapod-Bearbeitungszentrum mit einem feststehenden Gestell (1) und einem Träger (2), die über sechs in ihrer Länge verstellbare Streben (3) miteinander verbunden sind, bei dem die Anlenkpunkte (T₁,T₂,T₃) von drei Streben (3) an dem Träger (2) eine erste Angriffsebene bilden und die Anlenkpunkte (T₄,T₅,T₆) der drei weiteren Streben (3) an dem Träger (2) eine zweite, von der ersten Träger-Angriffsebene beabstandete Angriffsebene bilden, bei dem die Anlenkpunkte (G₁,G₂,G₃) von drei Streben (3) an dem Gestell (1) eine erste Angriffsebene bilden und die Anlenkpunkte (G₄,G₅,G₆) der drei weiteren Streben (3) an dem Gestell (1) eine zweite, von der ersten Gestell-Angriffsebene beabstandete Angriffsebene bilden **dadurch gekennzeichnet, daß** die Anlenkpunkte (T₁,T₂,T₃,T₄,T₅,T₆) der beiden Träger-Angriffsebenen derart übereinander angeordnet sind, daß die Verbindungslinien der übereinanderliegenden Anlenkpunktpaare (T₁,T₄; T₂,T₅;T₃T₆) parallel zueinander verlaufen.

2. Hexapod-Bearbeitungszentrum nach Anspruch 1, **dadurch gekennzeichnet, daß** das Gestell (1) eine dreieckige Grundfläche aufweist.

3. Hexpod-Bearbeitungszentrum nach Anspruch 1 oder 2, **dadurch gekennzeichnet, daß** das Gestell (3) drei Säulen (4) aufweist, die an ihrem einen Ende über ein Gestellbett (5) und an ihrem anderen Ende über ein Gestelljoch (6) miteinander verbunden sind.

4. Hexapod-Bearbeitungszentrum nach Anspruch 3, **dadurch gekennzeichnet, daß** sämtliche Streben (3) an den Säulen (4) angelenkt sind.

5. Hexapod-Bearbeitungszentrum nach Anspruch 4, **dadurch gekennzeichnet, daß** jeweils zwei Streben (3) an einer gemeinsamen Säule (4) angelenkt sind, wobei die Anlenkpunkte (G₂,G₄;G₃,G₅;G₁,G₆) in Richtung einer Längsachse der Säule (4) voneinander beabstandet sind.

6. Hexapod-Bearbeitungszentrum nach Anspruch 5, **dadurch gekennzeichnet, daß** die an einer gemeinsamen Säule (4) angelenkten Streben auf gegenüberliegenden Seiten der Säule angekoppelt sind.

7. Hexapod-Bearbeitungszentrum nach Anspruch 5 oder 6, **dadurch gekennzeichnet, daß** die beiden jeweils an einer Säule (4) angelenkten Streben (3) einander kreuzen.

8. Hexapod-Bearbeitungszentrum nach einem der Ansprüche 1 bis 7, **dadurch gekennzeichnet, daß** sämtliche Streben (3) tangential an dem Träger (2) angreifen, wobei alle Streben, die an Anlenkpunkten (T₁,T₂,T₃) der ersten Träger-Angriffsebene angelenkt sind, in einer Drehrichtung bezogen auf eine Längsachse (A) des Trägers (2) angreifen, während die Streben, die an Anlenkpunkten (T₄,T₅,T₆) der zweiten Träger-Angriffsebene angelenkt sind, in entgegengesetzter Drehrichtung angreifen.

9. Hexapod-Bearbeitungszentrum nach einem der Ansprüche 1 bis 8, **dadurch gekennzeichnet, daß** der Träger (2) eine zu seiner Längsachse (A) im wesentlichen zylindrische Grundgestalt aufweist, an deren Außenmantel drei sich in Richtung der Längsachse erstreckende Anlenkbereiche (7) mit zwei in Längsrichtung voneinander beabstandeten Gelenkansätzen der Anlenkpunkte (T₁,T₄;T₂,T₅;T₃,T₆) zur Ankopplung von jeweils zwei Streben (3) befinden.

10. Hexapod-Bearbeitungszentrum nach Anspruch 9, **dadurch gekennzeichnet, daß** die von einem Anlenkbereich (7) ausgehenden Streben (3) sich zu unterschiedlichen Säulen (4) erstrecken.

11. Hexapod-Bearbeitungszentrum nach einem der Ansprüche 1 bis 10, **dadurch gekennzeichnet, daß** die drei Anlenkpunkte (T₁,T₂,T₃;T₄,T₅,T₆;G₁,G₂,G₃;G₄,G₅,G₆), die jeweils eine Angriffsebene aufspannen, ein gleichseitiges Dreieck bilden.

12. Hexapod-Bearbeitungszentrum nach Anspruch 11, **dadurch gekennzeichnet, daß** die durch die Träger-Anlenkpunkte aufgespannten Dreiecke bei Betrachtung in Richtung einer Längsachse (A) des Trägers (2) zueinander kongruent sind.

13. Hexapod-Bearbeitungszentrum nach Anspruch 11 oder 12, **dadurch gekennzeichnet, daß** die durch die Gestell-Anlenkpunkte aufgespannten Dreiecke bezogen auf die Längsachse (A) des Trägers (2) um einen Winkel gegeneinander verdreht angeordnet sind.

14. Hexapod-Bearbeitungszentrum nach einem der Ansprüche 1 bis 13, **dadurch gekennzeichnet, daß** die Ankopplung der Streben (3) über Universaigelenke erfolgt, die Bewegungen in allen drei Raumachsen, auch überlagert, zulassen.

15. Hexapod-Bearbeitungszentrum nach einem der Ansprüche 1 bis 14, **dadurch gekennzeichnet, daß** an dem Gestellbett (5) zwischen diesem (5) und dem Träger (2) ein Werkzeugtisch (8) gelagert ist, der in zwei verschiedene Achsrichtungen bewegbar angeordnet ist.

16. Hexapod-Bearbeitungszentrum nach einem der Ansprüche 1 bis 15, **dadurch gekennzeichnet, daß** der Träger (2) eine Hauptspindel (9) aufweist, die entlang einer Längsachse (A) des Trägers (2) verläuft.

17. Hexapod-Bearbeitungszentrum nach Anspruch 15 oder 16, **dadurch gekennzeichnet, daß** in einer Ruhestellung des Trägers (2) die Achse der Hauptspindel (9) senkrecht zu den Bewegungsachsen des Werkzeugtisches (8) verläuft.

## Claims

1. Hexapodal machining center comprising a fixed frame (1) and a support (2) which are interconnected via six struts (3) of an adjustable length, wherein the connecting points (T₁, T₂, T₃) of three struts (3) on the support (2) form a first working plane and the connecting points (T₄, T₅, T₆) of the three further struts (3) on the support (2) form a second working plane spaced apart from the first working plane of the support, wherein the connecting points (G₁, G₂, G₃) of three struts (3) on the frame (1) form a first working plane and the connecting points (G₄, G₅, G₆) of the three further struts (3) on the frame (1) form a second working plane spaced apart from the first working plane of the frame, **characterized in that** the connecting points (T₁, T₂, T₃, T₄, T₅, T₆) of the two working planes of the support are superimposed such that the connecting lines of the superimposed pairs of connecting points (T₁, T₄; T₂, T₅; T₃, T₆) extend in parallel with each other.

2. The hexapodal machining center according to claim 1, **characterized in that** the frame (1) has a triangular base.

3. The hexapodal machining center according to claim 1 or 2, **characterized in that** the frame (3) comprises three columns (4) that are connected to one another at one end thereof via a frame bed (5) and at the other end thereof via a frame yoke (6).

4. The hexapodal machining center according to claim 3, **characterized in that** all of the struts (3) are coupled to the columns (4).

5. The hexapodal machining center according to claim 4, **characterized in that** two respective struts (3) are coupled to a joint column (4), the connecting points (G₂, G₄; G₃, G₅; G₁, G₆) being spaced apart from each other in the direction of a longitudinal axis of the column (4).

6. The hexapodal machining center according to claim 5, **characterized in that** the struts coupled to a joint column (4) are coupled at opposite sides of the column.

7. The hexapodal machining center according to claim 5 or 6, **characterized in that** the two struts (3) that are respectively coupled to a column (4) cross each other.

8. The hexapodal machining center according to any of claims 1 to 7, **characterized in that** all of the struts (3) tangentially act on the support (2), with all of the struts that are coupled to connecting points (T₁, T₂, T₃) of the first working plane of the support being operative in a rotational direction based on a longitudinal axis (A) of the support (2) whereas the struts which are coupled to connecting points (T₄, T₅, T₆) of the second working plane of the support are operative in the opposite rotational direction.

9. The hexapodal machining center according to any one of claims 1 to 8, **characterized in that** the support (2) has a basic shape substantially cylindrical to the longitudinal axis (A) thereof, the outer surface thereof having located thereon three connecting portions (7) extending in the direction of the longitudinal axis and having two longitudinally spaced-apart joint attachments of the connecting points (T₁, T₄; T₂, T₅; T₃, T₆) for coupling two respective struts (3).

10. The hexapodal machining center according to claim 9, **characterized in that** the struts (3) starting from a connecting portion (7) extend towards different columns (4).

11. The hexapodal machining center according to any one of claims 1 to 10, **characterized in that** the three connecting points (T₁, T₂, T₃; T₄, T₅, T₆; G₁, G₂, G₃; G₄, G₅, G₆) forming a respective working plane form an equilateral triangle.

12. The hexapodal machining center according to claim 11, **characterized in that** the triangles formed by the connecting points of the support are congruent with respect to each other when viewed in the direction of a longitudinal axis (A) of the support (2).

13. The hexapodal machining center according to claim 11 or 12, **characterized in that**, based on the longitudinal axis (A) of the support (2), the triangles formed by the connecting points of the frame are arranged such that they are displaced relative to each other by an angle.

14. The hexapodal machining center according to any one of claims 1 to 13, **characterized in that** the struts (3) are coupled via universal joints which allow movements in all of the three spatial axes, also in superimposed fashion.

15. The hexapodal machining center according to any one of claims 1 to 14, **characterized in that** a tool table (8) which is arranged to be movable in two different axial directions is supported on the frame bed (5) between said bed (5) and the support (2).

16. The hexapodal machining center according to any one of claims 1 to 15, **characterized in that** the support (2) comprises a main spindle (9) which extends along a longitudinal axis (A) of the support (2).

17. The hexapodal machining center according to claim 15 or 16, **characterized in that** in an inoperative position of the support (2) the axis of the main spindle (9) extends in a direction perpendicular to the motional axes of the tool table (8).

## Revendications

1. Centre d'usinage hexapode comprenant un bâti (1) fixe et un support (2), qui sont assemblés l'un à l'autre par l'intermédiaire de six traverses (3) réglables en longueur, dans lequel les points d'articulation (T₁, T₂, T₃) de trois traverses (3) forment sur le support (2) un premier plan d'appui et les points d'articulation (T₄, T₅, T₆) des trois autres traverses (3) forment sur le support (2) un deuxième plan d'appui situé à une distance donnée du premier plan d'appui du support, dans lequel les points d'articulation (G₁, G₂, G₃) de trois traverses (3) forment sur le bâti (1) un premier plan d'appui et les points d'articulation (G₄, G₅, G₆) des trois autres traverses (3) forment sur le bâti (1) un deuxième plan d'appui situé à une distance donnée du premier plan d'appui du bâti, **caractérisé en ce que** les points d'articulation (T₁, T₂, T₃, T₄, T₅, T₆) des deux plans d'appui du support sont disposés les uns au-dessus des autres, de telle sorte que les lignes de jonction entre les points d'articulation appariés (T₁, T₄ ; T₂, T₅ ; T₃, T₆) superposés sont parallèles entre elles.

2. Centre d'usinage hexapode selon la revendication 1, **caractérisé en ce que** le bâti (1) présente une surface de base triangulaire.

3. Centre d'usinage hexapode selon la revendication 1 ou 2, **caractérisé en ce que** le bâti (1) comporte trois montants (4), qui sont assemblés entre eux sur une extrémité par une table du bâti (5) et sur leur autre extrémité par une entretoise du bâti (6).

4. Centre d'usinage hexapode selon la revendication 3, **caractérisé en ce que** toutes les traverses (3) sont articulées sur les montants (4).

5. Centre d'usinage hexapode selon la revendication 4, **caractérisé en ce que** respectivement deux traverses (3) sont articulées sur un montant (4) commun, les points d'articulation (G₂, G₄ ; G₃, G₅ ; G₁, G₆) étant situés à une distance donnée les uns des autres dans le sens d'un axe longitudinal du montant (4).

6. Centre d'usinage hexapode selon la revendication 5, **caractérisé en ce que** les traverses articulées sur un montant (4) commun sont assemblées sur des côtés face à face du montant.

7. Centre d'usinage hexapode selon la revendication 5 ou 6, **caractérisé en ce que** les deux traverses (3) articulées chacune sur un montant (4) se croisent.

8. Centre d'usinage hexapode selon une des revendications 1 à 7, **caractérisé en ce que** toutes les traverses (3) viennent en appui tangentiel sur le support (2), sachant que toutes les traverses, qui sont articulées sur les points d'articulation (T₁, T₂, T₃) du premier plan d'appui du support, viennent en appui dans une direction du mouvement rotatoire par rapport à un axe longitudinal (A) du support (2), alors que les traverses, qui sont articulées sur les points d'articulation (T₄, T₅, T₆) du deuxième plan d'appui du support, viennent en appui dans la direction opposée du mouvement rotatoire.

9. Centre d'usinage hexapode selon une des revendications 1 à 8, **caractérisé en ce que** le support (2) présente une forme de base sensiblement cylindrique par rapport à son axe longitudinal (A), sur la paroi extérieure de laquelle sont situées trois zones d'articulation (7), qui s'étendent dans le sens de l'axe longitudinal et sont munies de deux saillies articulées, distantes l'une de l'autre dans le sens longitudinal, pour les points d'articulation (T₁, T₄; T₂, T₅ ; T₃, T₆) et destinées à l'assemblage de respectivement deux traverses (3).

10. Centre d'usinage hexapode selon la revendication 9, **caractérisé en ce que** les traverses (3) qui partent d'une zone d'articulation (7) s'étendent vers des montants (4) différents.

11. Centre d'usinage hexapode selon une des revendications 1 à 10, **caractérisé en ce que** les trois points d'articulation (T₁, T₂, T₃ ; T₄, T₅, T₆ ; G₁, G₂, G₃ ; G₄, G₅, G₆), entre lesquels s'étend respectivement un plan d'appui, forment un triangle équilatéral.

12. Centre d'usinage hexapode selon la revendication 11, **caractérisé en ce que** les triangles formés par les points d'articulation du support sont congrus les uns par rapport aux autres, par référence à une observation en direction d'un axe longitudinal (A) du support (2).

13. Centre d'usinage hexapode selon la revendication 11 ou 12, **caractérisé en ce que** les triangles formés par les points d'articulation du bâti sont décalés les uns par rapport aux autres selon un angle donné, par référence à l'axe longitudinal (A) du support (2).

14. Centre d'usinage hexapode selon une des revendications 1 à 13, **caractérisé en ce que** les traverses (3) sont assemblées au moyen de joints universels, qui permettent des mouvements sur les trois axes dans l'espace, même superposés.

15. Centre d'usinage hexapode selon une des revendications 1 à 14, **caractérisé en ce qu'**un plateau porte-outil (8) est monté contre la table du bâti (5) entre celle-ci (5) et le support (2), lequel plateau porte-outil est monté de manière à pouvoir se déplacer dans deux directions axiales différentes.

16. Centre d'usinage hexapode selon une des revendications 1 à 15, **caractérisé en ce que** le support (2) comporte une broche principale (9), qui s'étend le long d'un axe longitudinal (A) du support (2).

17. Centre d'usinage hexapode selon la revendication 15 ou 16, **caractérisé en ce que**, dans une position de repos du support (2), l'axe de la broche principale (9) est perpendiculaire aux axes de déplacement du plateau porte-outil (8).
